(19) Europäisches Patentamt
European Patent Office
Office européen des brevets

(11) **EP 2 822 066 A1**

(12) **EUROPEAN PATENT APPLICATION**
published in accordance with Art. 153(4) EPC

(43) Date of publication:
**07.01.2015 Bulletin 2015/02**

(51) Int Cl.:
**H01M 4/587** (2010.01)

(21) Application number: **13754595.0**

(22) Date of filing: **26.02.2013**

(86) International application number:
**PCT/JP2013/054960**

(87) International publication number:
**WO 2013/129396 (06.09.2013 Gazette 2013/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.02.2012 JP 2012039641**

(71) Applicant: **Sumitomo Bakelite Company Limited**
**Shinagawa-ku**
**Tokyo 140-0002 (JP)**

(72) Inventors:
• **TAKEUCHI, Takeshi**
  **Tokyo 140-0002 (JP)**
• **OKUMURA, Shuhei**
  **Tokyo 140-0002 (JP)**
• **KAMATA, Toru**
  **Tokyo 140-0002 (JP)**
• **YOKOTA, Yoshimasa**
  **Tokyo 140-0002 (JP)**

(74) Representative: **Ter Meer Steinmeister & Partner**
**Patentanwälte**
**Mauerkircherstrasse 45**
**81679 München (DE)**

(54) **METHOD FOR PRODUCING CARBON MATERIAL FOR NEGATIVE ELECTRODES OF LITHIUM ION SECONDARY BATTERIES, MIXTURE FOR NEGATIVE ELECTRODES OF LITHIUM ION SECONDARY BATTERIES, NEGATIVE ELECTRODE FOR LITHIUM ION SECONDARY BATTERIES, AND LITHIUM ION SECONDARY BATTERY**

(57)    The present invention provides a method of producing a carbon material for lithium ion secondary battery negative electrode, the carbon material containing a plurality of carbon particles, the method comprising the steps of: preparing a resin dispersion material containing a dispersion medium and a plurality of resin particles which are substantially insoluble in the dispersion medium; ejecting a plurality of liquid droplets of the resin dispersion material using a liquid droplet ejecting method, the liquid droplets each containing the dispersion medium and at least one of the resin particles; and heat-treating the plurality of liquid droplets so that the resin particle contained in each liquid droplet is carbonized while removing the dispersion medium to thereby obtain at least one of the carbon particles from each liquid droplet.

(b)

**FIG.1**

**Description**

## TECHNICAL FIELD

The present invention relates to a method of producing a carbon material for lithium ion secondary battery negative electrode, a mixture for lithium ion secondary battery negative electrode, a lithium ion secondary battery negative electrode, and a lithium ion secondary battery.

## RELATED ART

From the past, a carbon material composed of carbon particles is used for a lithium ion secondary battery negative electrode. This is because even if a charge-discharge cycle is repeatedly carried out with respect to a lithium ion secondary battery, dendrite-like lithium is hardly precipitated on the negative electrode in which the carbon particles are used, and thus safety thereof is secured.

In this regard, such carbon particles to be used for the lithium ion secondary battery negative electrode are generally produced through a resin synthesizing step in which a resin is synthesized, a carbonizing step in which the synthesized resin is carbonized to obtain a mass of carbonized products, and a crushing step in which the mass of carbonized products is crushed (see Patent document 1).

However, the conventional producing method has problems in that it takes a long time to produce the carbon particles, productivity thereof is insufficient, and a large-scaled facility and high cost are also required to produce the carbon particles. Further, since the carbon particles are obtained by crushing the mass of carbonized products of a resin, particle sizes of the carbon particles easily become uneven, which causes a problem of generating variability and the like in battery properties.

## PRIOR ART DOCUMENT

## PATENT DOCUMENT

Patent document 1: JP-A H7-69611

## SUMMARY OF THE INVENTION

## PROBLEM TO BE SOLVED BY THE INVENTION

It is an object of the present invention to provide a method capable of stably and easily producing a carbon material for lithium ion secondary battery negative electrode for a short period of time, a carbon material for lithium ion secondary battery negative electrode obtained using such a producing method, a mixture for lithium ion secondary battery negative electrode containing it, a lithium ion secondary battery negative electrode formed using this mixture for lithium ion secondary battery negative electrode, and a lithium ion secondary battery having stable properties such as output and capacity.

## MEANS FOR SOLVING PROBLEM

In order to achieve the object described above, the present invention includes the following features (1) to (17) .

(1) A method of producing a carbon material for lithium ion secondary battery negative electrode, the carbon material containing a plurality of carbon particles, the method comprising the steps of:

preparing a resin dispersion material containing a dispersion medium and a plurality of resin particles which are substantially insoluble in the dispersion medium;
ejecting a plurality of liquid droplets of the resin dispersion material using a liquid droplet ejecting method, the liquid droplets each containing the dispersion medium and at least one of the resin particles; and
heat-treating the plurality of liquid droplets so that the resin particle contained in each liquid droplet is carbonized while removing the dispersion medium to thereby obtain at least one of the carbon particles from each liquid droplet.

(2) The method of producing a carbon material for lithium ion secondary battery negative electrode according to the above feature (1), wherein the liquid droplet ejecting step and the heat-treating step are continuously carried out.

(3) The method of producing a carbon material for lithium ion secondary battery negative electrode according to the above feature (2), wherein a time interval between the liquid droplet ejecting step and the heat-treating step is 30 seconds or less.

(4) The method of producing a carbon material for lithium ion secondary battery negative electrode according to any one of the above features (1) to (3), wherein in the heat-treating step, the plurality of liquid droplets are heat-treated while being carried by a stream of a carrier gas.

(5) The method of producing a carbon material for lithium ion secondary battery negative electrode according to the above feature (4), wherein in the heat-treating step, the plurality of liquid droplets are carried vertically upward from below by the stream of a carrier gas.

(6) The method of producing a carbon material for lithium ion secondary battery negative electrode according to any one of the above features (1) to (5), wherein in the heat-treating step, the plurality of liquid droplets are passed through at least two regions having different temperatures.

(7) The method of producing a carbon material for lithium ion secondary battery negative electrode according to the above feature (6), wherein a temperature difference between the two regions is in the range of 50 to 500°C.

(8) The method of producing a carbon material for lithium ion secondary battery negative electrode according to any one of the above features (1) to (7), further comprising, after the heat-treating step, a step of heat-treating the carbon particles at a temperature higher than that in the heat-treating step.

(9) The method of producing a carbon material for lithium ion secondary battery negative electrode according to any one of the above features (1) to (8), wherein the at least one of the resin particles comprises a plurality of the resin particles, and
wherein in the heat-treating step, the resin particles contained in each liquid droplet are melted and integrated with each other to form one molten particle, and then the one molten particle is carbonized to thereby obtain the carbon particle.

(10) The method of producing a carbon material for lithium ion secondary battery negative electrode according to any one of the above features (1) to (9), wherein in the resin dispersion material preparing step, the resin dispersion material is obtained by dispersing the resin particles into the dispersion medium.

(11) The method of producing a carbon material for lithium ion secondary battery negative electrode according to any one of the above features (1) to (10), wherein an average particle size of the resin particles is in the range of 0.01 to 10 $\mu$m.

(12) The method of producing a carbon material for lithium ion secondary battery negative electrode according to any one of the above features (1) to (11), wherein the resin particles contain a polycondensed product of a resin having a benzene skeleton.

(13) The method of producing a carbon material for lithium ion secondary battery negative electrode according to any one of the above features (1) to (12), wherein the dispersion medium contains water.

(14) The method of producing a carbon material for lithium ion secondary battery negative electrode according to any one of the above features (1) to (13), wherein an average particle size of the plurality of liquid droplets is in the range of 1 to 100 $\mu$m.

(15) A mixture for lithium ion secondary battery negative electrode containing carbon particles obtained by the method of producing a carbon material for lithium ion secondary battery negative electrode defined by any one of the above features (1) to (14).

(16) A lithium ion secondary battery negative electrode formed using the mixture for lithium ion secondary battery negative electrode defined by the above feature (15).

(17) A lithium ion secondary battery including the lithium ion secondary battery negative electrode defined by the above feature (16).

**EFFECT OF THE INVENTION**

According to the present invention, it is possible to provide a method capable of stably and easily producing a carbon material for lithium ion secondary battery negative electrode for a short period of time, a carbon material for lithium ion secondary battery negative electrode obtained using such a producing method, a mixture for lithium ion secondary battery negative electrode containing it, a lithium ion secondary battery negative electrode formed using this mixture for lithium ion secondary battery negative electrode, and a lithium ion secondary battery having stable properties such as output and capacity.

**BRIEF DESCRIPTION OF THE DRAWINGS**

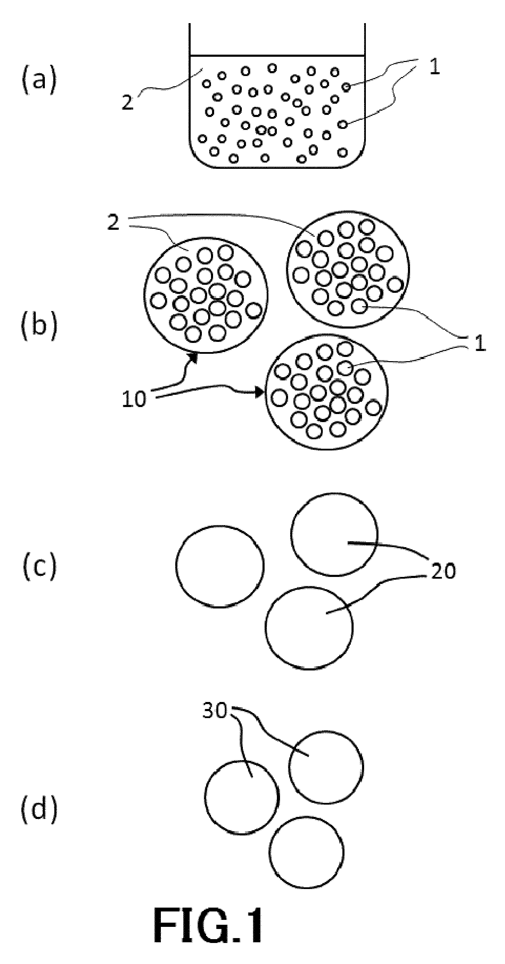

FIG. 1(a) is a view schematically showing a resin dispersion material, FIG. 1(b) is a view schematically showing liquid droplets of the resin dispersion material, FIG. 1(c) is a view schematically showing molten particles each formed by melting resin particles and integrating them with each other, and FIG. 1(d) is a view schematically showing carbon particles each formed by carbonizing the molten particles.

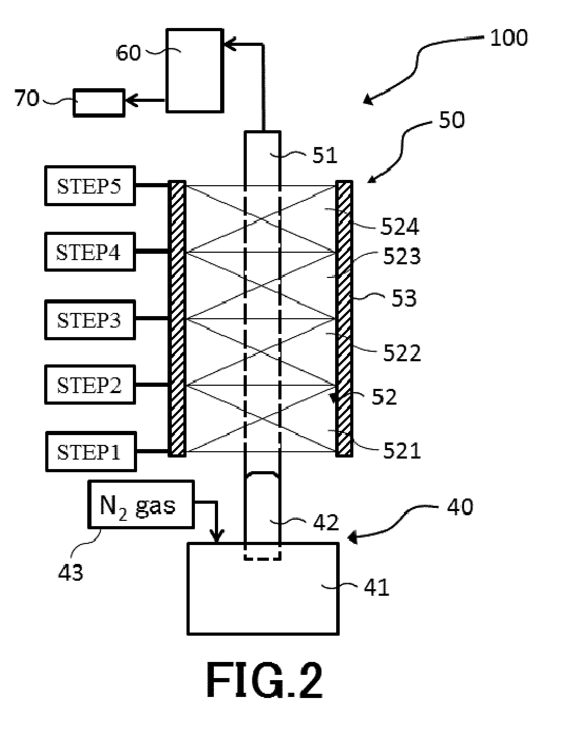

FIG. 2 is a partial sectional view showing an example of a producing apparatus of a carbon material for lithium ion secondary battery negative electrode which is used in the present invention.

**MODE FOR CARRYING OUT THE INVENTION**

A method of producing a carbon material for lithium ion secondary battery negative electrode according to the present invention is characterized by including: a step of preparing a resin dispersion material containing a dispersion medium and a plurality of resin particles which are substantially insoluble in the dispersion medium; a step of ejecting a plurality of liquid droplets of the resin dispersion material; and a step of heat-treating the plurality of liquid droplets so that the resin particles are carbonized to thereby obtain carbon particles.

The method of producing a carbon material for lithium ion secondary battery negative electrode (hereinafter, simply referred to as a "carbon material for negative electrode" or a "carbon material") according to the present invention can exhibit the following effects by including the above steps.

Namely, according to the present invention, the carbon particles can be obtained by ejecting the plurality of liquid droplets of the resin dispersion material using the liquid droplet ejecting method, and heat-treating these liquid droplets. This makes it possible to omit the time required for the step of crushing the mass of carbonized products of a resin which was being carried out during the conventional producing steps of the carbon particles. Therefore, it is possible to remarkably reduce the number of the producing steps of the carbon particles and to easily obtain the carbon particles for a short period of time. Further, since a large-sized crushing apparatus for producing the carbon particles is not required, it is possible to produce the carbon particles at low cost. Furthermore, in the case where the carbon particles are conventionally produced through the crushing step, the shapes or sizes of the obtained carbon particles become unstable. However, according to the present invention, by controlling particle sizes of the resin particles, an amount of the resin particles contained in the resin dispersion material and particle sizes of the liquid droplets of the resin dispersion material, it is possible to stably obtain carbon particles having designed shapes and sizes. This makes it possible to improve productivity of such carbon particles and provide a lithium ion secondary battery having stable properties such as output and capacity.

Further, according to the present invention, the carbon particles are obtained by directly heat-treating the liquid droplets containing the resin particles. Therefore, it is possible to carbonize the resin particles for a short period of time as compared with a method in which dried particles (dried resin particles) are formed from a liquid containing a resin material using a spray drying technique or the like, the formed dried particles are collected once, and then these dried particles are carbonized. Furthermore, since it also becomes possible to continuously carbonize the liquid droplets, the productivity of the carbon particles (carbon material) is significantly improved. Moreover, since the large-sized facility used for conventionally carbonizing is not required, the carbon particles can be produced at low cost.

In addition, according to the present invention, by using the resin dispersion material in which the resin particles, which are substantially insoluble in the dispersion medium, are dispersed into the dispersion medium, it is possible to carry out stable ejection of the liquid droplets which would not be realized by ejecting a molten resin or a resin solution in which a resin is dissolved into a solvent using a liquid droplet ejecting method.

In the case where the molten resin is ejected, a melt viscosity of a resin has to be reduced. In this case, it is required that a liquid having low viscosity is made by heating the resin at a very high temperature or a liquid having low viscosity at a relatively low temperature is made by lowering a molecular weight of the resin. In the former case, since the resin is heated at the very high temperature, a load on a nozzle and the like of a liquid droplet ejecting apparatus becomes too large. Further, if not keeping the temperature of the resin at the high temperature, the resin becomes difficult to be stably ejected due to rapid increase of the melt viscosity thereof. On the other hand, in the latter case, since the molecular weight of the resin is small, the resin is easily gasified when being heat-treated, and thus the time required to obtain carbonized products (carbon particles) in a sufficient amount becomes too long or it cannot be obtained.

Further, in the case where the resin solution in which the resin is dissolved into the solvent is ejected, a combination of the resin and the solvent which can be used for preparing the resin solution is limited. In order to adjust the resin solution to the low viscosity so as to be stably ejected, the molecular weight of the resin has to be sufficiently low or an amount of the resin contained in the resin solution has to be sufficiently reduced. Even if such a resin solution is used, the time required to obtain the carbonized products (carbon particles) in a sufficient amount becomes too long or it cannot be obtained.

In the case where the molten resin or the resin solution in which the resin is dissolved into the solvent is stably ejected as liquid droplets, the resin to be used or the combination of the resin and the solvent is limited. Further, even if it can be ejected, the carbonized products are very difficult to be obtained in a sufficient amount. On the other hand, for example, if a resin having a high molecular weight is used in order to obtain the carbonized products in the sufficient amount, the molten resin or the resin solution becomes sticky due to increase of the viscosity thereof. Therefore, by ejecting it, there is a case that clogging of the nozzle of the liquid droplet ejecting apparatus occurs or the liquid droplet ejecting apparatus is contaminated.

In contrast, according to the present invention, since the resin particles are only dispersed in the dispersion medium without being melted and dissolved, a range of choices of a combination of the resin and the dispersion medium, which can be stably ejected as the liquid droplets, becomes relatively expanded. Further, since a viscosity of the resin dispersion material substantially depends on a viscosity of the dispersion medium, it is possible to make a molecular weight of the resin constituting the resin particles high and increase an amount of the resin particles contained therein. Therefore, according to the present invention, it is possible to stably eject the liquid droplets and efficiently obtain the carbon particles in a sufficient amount in the heat-treating step. This makes it possible to further improve the productivity of the carbon material containing the carbon particles.

Further, a mixture for lithium ion secondary battery negative electrode according to the present invention includes the carbon material containing the carbon particles obtained by the above method of producing a carbon material for lithium ion secondary battery negative electrode.

Namely, the mixture for lithium ion secondary battery negative electrode (hereinafter, simply referred to as a "mixture for negative electrode") according to the present invention includes the carbon material containing the carbon particles obtained by the method of producing a carbon material for negative electrode and having stable shapes, particle diameters (sizes) and the like. In the case where the mixture for negative electrode includes such carbon particles, it is possible to suppress the carbon particles from being separated or segregated from the other components such as a binder resin and a dispersion medium in the mixture for negative electrode, that is, to uniformly disperse the carbon particles in the mixture for negative electrode.

A lithium ion secondary battery negative electrode according to the present invention is formed using the mixture for negative electrode.

By using the above-mentioned mixture for negative electrode, it is possible to provide a lithium ion secondary battery negative electrode having stable properties such as output and capacity.

A lithium ion secondary battery according to the present invention includes the lithium ion secondary battery negative electrode.

By using the above-mentioned lithium ion secondary battery negative electrode, it is possible to provide a lithium ion secondary battery having stable properties such as output and capacity.

Hereinafter, description will be made on the method of producing a carbon material for negative electrode according to the present invention in detail.

The method of producing a carbon material for negative electrode according to the present invention includes: a step of preparing a resin dispersion material containing a dispersion medium and a plurality of resin particles which are substantially insoluble in the dispersion medium (that is, a resin dispersion material preparing step); a step of ejecting a plurality of liquid droplets of the resin dispersion material using a liquid droplet ejecting method, the liquid droplets each containing the dispersion medium and the resin particles (that is, a liquid droplet ejecting step); and a step of heat-treating the plurality of liquid droplets so that the resin particles contained in each liquid droplet are carbonized while removing the dispersion medium to thereby obtain at least one of the carbon particles from the respective liquid droplet (that is, a heat-treating step).

FIG. 1(a) is a view schematically showing the resin dispersion material, FIG. 1(b) is a view schematically showing the liquid droplets of the resin dispersion material, FIG. 1(c) is a view schematically showing molten particles each formed by melting the resin particles and integrating them with each other, and FIG. 1(d) is a view schematically showing the carbon particles each formed by carbonizing the molten particles.

<Resin dispersion material preparing step>

The resin dispersion material containing the dispersion medium 2 and the plurality of resin particles 1 which are substantially insoluble in the dispersion medium 2 are prepared as follows.

As shown in FIG. 1(a), such a resin dispersion material can be obtained, for example, by dispersing the plurality of resin particles into the dispersion medium 2. From the reason as mentioned above, since such a resin dispersion material has a low viscosity, it is stably obtain liquid droplets 10 of the resin dispersion material, in which the resin particles are uniformly dispersed in the dispersion medium, in the liquid droplet ejecting step. This makes it possible to stably heat-treat the liquid droplets 10 of the resin dispersion material in the heat-treating step after the liquid droplet ejecting step so that the productivity of the carbon particles 30 is improved.

A method of dispersing the resin particles 1 into the dispersion medium 2 is not limited to a specific method. The dispersion is carried out, for example, by mixing the resin particles and the dispersion medium and stirring them. In order to further improve the dispersibility of the resin particles in the dispersion medium, a stirring machine capable of applying a powerful stirring energy such as a bead mill machine also can be used for stirring the resin particles and the dispersion medium. Further, in the case where the resin particles are formed of a resin synthesized by polymerizing monomers in a solvent and insolubilized in the solvent due to increase of a molecular weight thereof, the resin dispersion material, in which the formed resin particles are dispersed, also can be obtained by emulsifying the resin particles into the solvent used for the synthesis of the resin (that is, a component incapable of dissolving the resin particles) by stirring them without collecting the resin particles. In this case, it is preferred that a surfactant or the like is added to the dispersion medium as needed. In the case where a phenol-based resin is used as a constituent material of the resin particles, polyvinyl alcohol (PVA) or the like can be preferably used as the surfactant. Further, in this case, an amount of the surfactant contained in the resin dispersion material is not limited to a specific value, but preferably in the range of 0.1 to 15 parts by weight, and more preferably in the range of 1.0 to 10 parts by weight with respect to 100 parts by weight of the resin particles. By setting the amount of the surfactant contained in the resin dispersion material within the above range, it is possible to further improve the dispersibility of the resin particles in the resin dispersion material to thereby reliably reduce the viscosity of the resin dispersion material. Therefore, in the liquid droplet ejecting step, an ejecting property of the resin dispersion material is improved so that the liquid droplets of the resin dispersion material can be stably formed.

<Liquid droplet ejecting step>

The resin dispersion material prepared in the above way is ejected using the liquid droplet ejecting method to thereby form the plurality of liquid droplets 10 each containing the dispersion medium 2 and the plurality of resin particles 1. As shown in FIG. 1(b), each liquid droplet 10 contains the plurality of resin particles 1, but it may contain only one resin particle 1. Namely, each liquid droplet 1 only has to contain the dispersion medium 2 and at least one resin particle 1.

Examples of the liquid droplet ejecting method for forming the liquid droplets 10 of the resin dispersion material include, but are not limited to, a spraying method, an ink jet method, a bubble jet method (registered trademark) and the like. Especially, the spraying method is preferably used. Since the resin dispersion material is ejected (sprayed) in the form of a mist according to the spraying method, it is possible to form liquid droplets 10 having a small variation in particle size. The liquid droplets 10 having the small variation in particle size stabilize particle sizes of the carbon particles 30 obtained by heat-treating them in the heat-treating step. By using such carbon particles 30, it is possible to stabilize properties such as output and capacity of a lithium ion secondary battery. Further, since a large amount of liquid droplets can be formed by a single spraying according to the spraying method, it is possible to form the liquid droplets 10 of the resin dispersion material in a large amount for a short period of time.

As the spraying method, a technique such as electrostatic spraying, ultrasonic spraying or spraying through a two fluid nozzle, a pressurization two fluid nozzle, a pressurization nozzle or a disk atomizer can be used. From the viewpoint of mass-production of the carbon particles, preferable is the ultrasonic spraying or the spraying through the two fluid nozzle, the pressurization two fluid nozzle, the pressurization nozzle or the disk atomizer, and more preferable is the spraying through the two fluid nozzle, the pressurization two fluid nozzle, the pressurization nozzle or the disk atomizer. By carrying out the spraying through these nozzles, it is possible to form the liquid droplets having smaller variation in particle size. Especially, preferable is a nozzle having a structure allowing the liquid droplets sprayed from a plurality of two fluid nozzles to collide with each other. By using the nozzle having such a structure, particle sizes of liquid droplets formed by allowing the liquid droplets sprayed from the two fluid nozzles to collide with each other become smaller than particle sizes of the liquid droplet sprayed from each two fluid nozzle. Further, since the liquid droplets are sprayed from the plurality of two fluid nozzles, it is possible to form a large amount of the liquid droplets for a short period of time. For these reasons, both atomization and mass-production of the liquid droplets can be achieved in a high level.

The supersonic spraying can be carried out, for example, by connecting a supersonic atomization unit ("HM-2412" or "HM-1630" produced by HONDA ELECTRONICS) to a bottom of a plastic container, putting the resin dispersion material into the plastic container at a predetermined amount, and then operating the supersonic atomization unit. When operating the supersonic atomization unit, supersonic vibration is applied to the resin dispersion material in the plastic container. This makes it possible to atomize the resin dispersion material to thereby form fine liquid droplets of the resin dispersion material.

The spraying with the two fluid nozzle is carried out, for example, by atomizing the resin dispersion material with a two fluid nozzle used in a mini spray dryer ("B-290" produced by BUCHI) or the like.

An average particle size of the liquid droplets 10 sprayed using these methods is preferably in the range of 1 to 100 $\mu$m, and more preferably in the range of 5 to 50 $\mu$m. If the average particle size of the liquid droplets 10 is the above lower limit value or more, a component ratio difference between the respective liquid droplets 10 is reduced. On the other hand, if the average particle size of the liquid droplets 10 is the above upper limit value or less, the liquid droplets 10 are sufficiently and uniformly heated by the heat-treating in the heat-treating step. Further, if the average particle size of the liquid droplets 10 is the above lower limit value or more, increase of an initial nonreversible capacity of a manufactured lithium ion secondary battery is suppressed. On the other hand, if the average particle size of the liquid droplets 10 is the above upper limit value or less, the mixture for negative electrode containing the carbon particles 30 can be applied onto a current collector such as a metal foil without generating unevenness when a lithium ion battery electrode is produced, which becomes possible to improve an electrode density and thin the electrode.

The liquid droplet ejecting step also can be carried out at a high temperature. By carrying out it at the high temperature, it is possible to lower the viscosity of the resin dispersion material to thereby further stabilize the ejection. Such a temperature in the liquid droplet ejecting step is not limited to a specific value, but is preferably in the range of 0 to 100°C, and more preferably in the range of 10 to 50°C, for example, if water is used as the dispersion medium. If the temperature is the above lower limit value or more, the viscosity of the resin dispersion material becomes lower so that the liquid droplet ejecting is more stabilized, whereas if the temperature is the above upper limit value or less, it is possible to prevent increase of the viscosity thereof which would occur due to vaporization of the dispersion medium.

<Heat-treating step>

Next, the liquid droplets 10 of the resin dispersion material formed in the liquid droplet ejecting step are heat-treated to thereby obtain the carbon particles 30 (heat-treating step). More specifically, by heat-treating the plurality of liquid droplets 10 of the resin dispersion material, the resin particles 1 contained in each liquid droplet are carbonated while removing the dispersion medium 2 to obtain the carbon particle 30.

In the heat-treating step, by directly heat-treating the liquid droplets 10 obtained in the liquid droplet ejecting step, the plurality of resin particles 1 contained in each liquid droplet 10 are melted and integrated with each other. As a result, as shown in FIG. 1(c), one molten particle 20 is formed from each liquid droplet 10. Thereafter, each molten particle 20 is thermally decomposed and carbonated to form the carbon particle 30 as shown in FIG. 1(d).

In this way, according to the present invention, the carbon particle 30 is formed by thermally decomposing and carbonating the resin particles 1 (molten particle 20) by each liquid droplet 10 in the heat-treating step. As described above, since the liquid droplets 10 formed in the liquid droplet ejecting step have a small variation in particle size, amounts of the resin particles 1 contained in the respective liquid droplets 10 are almost equal to each other. Therefore, particle sizes of the molten particles 20 formed from the resin particles 1 contained in the respective liquid droplets 10 are also almost equal to each other. Since such molten particles 20 are heat-treated under the same condition, it is also possible to reduce a variation in particle size of the carbon particles 30 obtained by carbonating the respective molten particles 20. By using such carbon particles 30 having the small variation in particle size as a material for negative electrode, it is possible to stabilize properties such as power and capacity of the lithium ion secondary battery.

Further, since the liquid droplets 10 having the small variation in particle size are heat-treated, it is possible to evenly and uniformly heat-treat the resin particles 1 contained in the respective liquid droplets 10. This makes it possible to efficiently obtain carbon particles having a uniform degree of carbonization and stable properties.

Furthermore, in the present invention, since the carbon particles 30 can be obtained by directly heat-treating the liquid droplets 10 formed in the liquid droplet ejecting step, it is possible to shorten the time required for carbonizing the resin particles 1. The resin particles 1 can be carbonized for a short period of time as compared with, for example, a method in which dried particles (dried resin particles) are formed from a liquid containing a resin material using a spray drying technique or the like, the formed dried particles are collected once, and then these dried particles are carbonized. This makes it possible to greatly improve the productivity of the carbon particles.

It is preferred that such a heat-treating step is continuously carried out following the liquid droplet ejecting step. Namely, it is preferred that the liquid droplets 10 formed in the liquid droplet ejecting step are continuously heat-treated without being collected as dried particles (dried resin particles) which would be obtained by drying them.

Resin particles obtained by drying liquid droplets are easily aggregated together. Therefore, if such dried particles are collected once, the dried particles are aggregated together to thereby form aggregates thereof having various particle sizes. In the case where such aggregates of the dried particles having different particle sizes are heat-treated, a variation in particle size of molten particles, which are formed by melting the aggregates and integrating them with each other, becomes large. As a result, a variation in particle size of carbon particles finally obtained also becomes large. In the case where such carbon particles having the large variation in particle size are used as a material for negative electrode, it is impossible to sufficiently improve properties such as power and capacity of a lithium ion secondary battery. Further, since a step of collecting the dried particles once has to be added, productivity of the carbon particles cannot be improved.

Therefore, by continuously carrying out the heat-treating step following the liquid droplet ejecting step, the demerit as described above can be resolved, and thus it is possible to efficiently obtain a carbon material having excellent properties required for carbon particles for lithium ion battery negative electrode.

For the above reasons, it is preferred that the liquid droplets 10 are transferred to the heat-treating step in a state that the dispersion medium 2 is not vaporized therefrom as much as possible. This makes it possible to reliably prevent the particle sizes of the liquid droplets 10 from being changed. From such a viewpoint, it is good that a time interval between the liquid droplet ejecting step and the heat-treating step is short as much as possible. Specifically, the time interval is preferably 30 seconds or less, more preferably 15 seconds or less, and even more preferably 5 seconds or less. By setting the time interval within the above range, the above-mentioned effect can be more conspicuously exhibited.

In this regard, it is preferred that in the heat-treating step, the liquid droplets 10 of the resin dispersion material formed in the liquid droplet ejecting step are heat-treated while being carried by a stream of a carrier gas such as air or nitrogen. This makes it possible to heat-treat the respective liquid droplets 10 without destroying the liquid droplets 10 and integrating the liquid droplets 10 with each other. As a result, it is possible to stably obtain carbon particles 30 having a smaller variation in particle size. In this regard, inert gases such as nitrogen are preferable as the carrier gas. This makes it possible to improve purity of the carbon particles 30 to be finally obtained.

The heat-treating step is not especially limited, but is carried out, for example, by passing the liquid droplets 10 formed in the liquid droplet ejecting step through a ceramic tube heated at a constant temperature. A temperature of such a ceramic tube is preferably in the range of 500 to 1,500°C, more preferably in the range of 700 to 1,300°C, and even more preferably in the range of 800 to 1,200°C. By setting the temperature to the above lower limit value or more, since the liquid droplets 10 are sufficiently heated, it is possible to obtain carbon particles 30 in which the carbonization of the resin particles 1 is reliably progressed. On the other hand, by setting the temperature to the above upper limit value or less, it is possible to reliably prevent carbon particles having nano-order sizes such as carbon black from being produced by carbonizing organic components gasified due to rapid thermal decomposition of the resin particles 1 (molten particles 20). Further, it is also possible to reliably prevent carbon particles having greatly different shapes and sizes from desired ones from being produced due to burst of the liquid droplets 10 during the heat-treating step.

In the case where a metal or glass tube being cheaper and having low heat resistance is used instead of the ceramic tube having high heat resistance, there is a case that the liquid droplets 10 of the resin dispersion material cannot be sufficiently heated through the metal or glass tube. In this case, it is preferred that a temperature (gas temperature) of the stream of a carrier gas for carrying the liquid droplets 10 of the resin dispersion material is adjusted within 500 to 1,500°C like the temperature of the above-mentioned ceramic tube using a micro cable air heater or the like. The gas temperature in this case is also more preferably in the range of 700 to 1,300°C, and even more preferably in the range of 800 to 1,200°C like the above. By setting the temperature to the above lower limit value or more, since the liquid droplets 10 are sufficiently heated, it is possible to obtain carbon particles 30 in which the carbonization of the resin particles 1 is reliably progressed. On the other hand, by setting the temperature to the above upper limit value or less, it is possible to reliably prevent carbon particles having nano-order sizes such as carbon black from being produced by carbonizing organic components gasified due to rapid thermal decomposition of the resin particles 1 (molten particles 20). Further, it is also possible to reliably prevent carbon particles having greatly different shapes and sizes from desired ones from being produced due to burst of the liquid droplets 10 during the heat-treating step.

Further, in the heat-treating step, the heat-treating can be also carried out using a batch heating oven or a continuous heating oven. Also in this case, a temperature of the oven is preferably in the range of 500 to 1,500°C, more preferably in the range of 700 to 1,300°C, and even more preferably in the range of 800 to 1,200°C like the above. By setting the temperature to the above lower limit value or more, since the liquid droplets 10 are sufficiently heated, it is possible to obtain carbon particles 30 in which the carbonization of the resin particles 1 is reliably progressed. On the other hand, by setting the temperature to the above upper limit value or less, it is possible to reliably prevent carbon particles having nano-order sizes such as carbon black from being produced by carbonizing organic components gasified due to rapid thermal decomposition of the resin particles 1 (molten particles 20). Further, it is also possible to reliably prevent carbon particles having greatly different shapes and sizes from desired ones from being produced due to burst of the liquid droplets 10 during the heat-treating step.

A heat-treating time in the heat-treating step is preferably in the range of 0.1 seconds to 10 minutes, and more preferably in the range of 1 second to 3 minutes. By setting the heat-treating time to the above lower limit value or more, the resin particles 1 can be sufficiently carbonized. By using the carbon particles 30 obtained in this way as the material for negative electrode, it is possible to obtain a lithium ion secondary battery showing a high charge-discharge capacity density. On the other hand, by setting the heat-treating time to the above upper limit value or less, the time required for the heat-treating step becomes shorter, and thus the productivity of the carbon particles 30 can be sufficiently improved.

Further, the heat-treating step may be carried out by applying a predetermined thermal history to the liquid droplets 10 of the resin dispersion material.

A method of applying the thermal history is not limited to a specific method. As one method, there is a method in which the liquid droplets 10 of the resin dispersion material are prepared in a heating oven capable of providing a predetermined thermal profile, a heat-treating is started at a constant temperature, and then a subsequent heat-treating is performed at a temperature higher than the starting temperature of the heat-treating. Further, as the other method, there is a method in which the liquid droplets 10 of the resin dispersion material are passed through a ceramic or glass tube having a temperature gradient getting higher from an introduction side toward a discharge side thereof at a constant speed. Here, the term "having temperature gradient" means that the ceramic or glass tube through which the liquid droplets 10 of the resin dispersion material are passed has at least two regions having different temperatures.

Among them, as the method of applying the thermal history to the liquid droplets 10 of the resin dispersion material, preferable is the method in which the liquid droplets 10 are passed through the ceramic tube or the like having the temperature gradient. In this case, since the liquid droplets 10 passing through the ceramic tube are not rapidly heated, burst of the liquid droplets 10 can be reliably prevented by suppressing vaporization of the resin particles 1 and boil of the dispersion medium 2 during the heat-treating. As a result, it is possible to stably obtain carbon particles 30 whose variation in particle size is further suppressed.

In such a ceramic tube or the like having the temperature gradient, it is preferred that a temperature difference between adjacent regions having different temperatures is preferably in the range of 50 to 600°C, more preferably in the range of 100 to 500°C, and even more preferably in the range of 150 to 450°C. This makes it possible to remarkably exhibit the above-mentioned effects.

Further, the heat-treating, to which the liquid droplets 10 of the resin dispersion material are subjected at this time, may be carried out under the specifically unlimited condition. However, the highest temperature thereof is preferably in the range of 500 to 1,500°C, more preferably in the range of 700 to 1,300°C, and even more preferably in the range of 800 to 1,200°C. Further, a temperature rising rate thereof is preferably in the range of 1 to 100°C/s, and more preferably in the range of 5 to 80°C/s. Furthermore, a heat-treating time thereof is preferably in the range of 0.1 seconds to 10 minutes, and more preferably in the range of 1 second to 3 minutes. By setting these conditions to the above lower limit values or more, since the liquid droplets 10 are sufficiently heated, it is possible to obtain carbon particles 30 in which the carbonization of the resin particles 1 is reliably progressed. On the other hand, by setting the conditions to the above upper limit values or less, it is possible to reliably prevent carbon particles having nano-order sizes such as carbon black from being produced by carbonizing organic components gasified due to rapid thermal decomposition of the resin particles 1 (molten particles 20). Further, it is also possible to reliably prevent carbon particles having greatly different shapes and sizes from desired ones from being produced due to burst of the liquid droplets 10 during the heat-treating step.

The above-mentioned carbon material (carbon particles) can be produced using, for example, a producing apparatus as shown in FIG. 2.

FIG. 2 is a partial sectional view showing an example of the producing apparatus of the carbon material for lithium ion secondary battery negative electrode which is used in the present invention. In this regard, the top side in FIG. 2 is referred to as "upper" or "upper side", and the bottom side therein is referred to as "lower" or "lower side".

As shown in FIG. 2, a producing apparatus 100 of the carbon material for lithium ion secondary battery negative electrode includes: a spraying unit 40 that sprays the resin dispersion material as the liquid droplets 10; a heat-treating unit 50 provided above the spraying unit 40, the heat-treating unit 50 that forms the carbon particles 30 by heat-treating the liquid droplets 10 sprayed from the spraying unit 40 so that the resin particles 1 are thermally decomposed and carbonized; a collecting unit 60 that collects the carbon particles 30 obtained in the heat-treating unit 50; and a recovering unit 70 that recovers by-products formed by thermally decomposing the resin particles 1 during the carbon particles 30 are formed from the resin particles 1 in the heat-treating unit 50. Hereinafter, such a producing apparatus 100 will be described in detail.

The spraying unit 40 has a tank 41 for storing the resin dispersion material, a spraying nozzle 42 whose lower end portion is located within the tank 41 and which has a flow channel communicated with the inside of the tank 41, and a carrier gas applying means 43 for introducing the carrier gas into the tank 41. Such a spraying nozzle 42 is extended vertically upward from an upper portion of the tank 41. Therefore, the liquid droplets 10 are sprayed vertically upward from a distal end portion of the spraying nozzle 42.

The resin dispersion material is stored in the tank 41. An internal pressure of the tank 41 is increased by introducing, for example, the carrier gas such as the nitrogen gas from the carrier gas applying means 43 into the tank 41. This makes it possible to pass the resin dispersion material 3 through the flow channel of the spraying nozzle 42 and to spray it from an upper end portion thereof to thereby form the liquid droplets 10. As the spraying nozzle 42, various nozzles as described above can be used.

Such liquid droplets 10 are introduced into the heat-treating unit 50 provided above the spraying unit 40.

The heat-treating unit 50 has a reactor core tube 51 connected to the upper end portion of the spraying nozzle 42 and extended vertically upward, a substantially cylindrical furnace body 52 concentrically provided on a side of a periphery of the reactor core tube 51, and a heat insulator 53 covering a periphery of the furnace body 52.

A luminal portion of the reactor core tube 51 is communicated with an upper end of the spraying nozzle 42 on a side of a lower end thereof, and is communicated with an inside of the collecting unit 60 that collects the obtained carbon particles 30 on a side of an upper end thereof. The liquid droplets 10 sprayed vertically upward from the upper end portion of the spraying nozzle 42 are carried toward an upper side (vertical upper side) of the reactor core tube 51 by the stream of a carrier gas, which flows into the luminal portion of the reactor core tube 51 along with the liquid droplets 10. As a result, the liquid droplets 10 are heat-treated by being passed through the reactor core tube 51 heated with the furnace body 52, so that the resin particles 1 are carbonized to form the carbon particles 30.

In this way, according to the producing apparatus 100, in the reactor core tube 51, the liquid droplets 10 are heat-treated while being carried vertically upward from below by the stream of a carrier gas. Here, in the case where the liquid droplets 10 are heat-treated while being dropped, the liquid droplets 10 become tear shapes under the influence of gravity, whereas in the producing apparatus 100, since the liquid droplets 10 are carried along a gravity-defying direction, the liquid droplets 10 become near true spherical shapes. By heat-treating the liquid droplets 10 having such spherical shapes, it is possible to more uniformly heat-treat each resin particle 1 contained in the liquid droplets 10. Therefore, since a variation in the carbonization degree of the resin particles 1 hardly occurs, it is possible to obtain carbon particles 30 having stable properties. In addition, according to such a structure, since the liquid droplets 10 falling vertically downward are blown up vertically upward, it is possible to prolong the time when the liquid droplets 10 are passed through the luminal portion of the reactor core tube 51. Therefore, since the liquid droplets 10 can be sufficiently heat-treated, it is possible to stabilize a crystal structure of the obtained carbon particles 30. As a result, it is possible to further stabilize the properties of the carbon particles.

In this regard, the reactor core tube 51 is not limited to a specific type. However, as the reactor core tube 51, a ceramic tube having an inner diameter of 5 to 20 mm and a length of 1.0 to 2.0 m or the like is preferably used.

The furnace body 52 is provided so as to cover a region (heat-treating region) of the reactor core tube 51 other than the upper end and lower end portions thereof. This furnace body 52 is composed of a plurality of coils each formed by turning an electrically heated wire along a circumferential direction of the reactor core tube 51. By adjusting the number of turns of each coil and a voltage to be applied, a temperature of each coil can be controlled. In this furnace body 52, as shown in FIG. 2, a first coil 521, a second coil 522, a third coil 523 and a fourth coil 524 are provided upward from below.

In such a furnace body 52, temperatures of the coils 521 to 524 are set to become high in a step-by-step manner upward from blow. In this case, since the liquid droplets 10 passing through the reactor core tube 51 are not rapidly heated, burst of the liquid droplets 10 can be reliably prevented by suppressing vaporization of the resin particles 1 and boil of the dispersion medium 2. As a result, it is possible to stably obtain carbon particles 30 whose variation in particle size is further suppressed.

The temperatures of the respective coils 521 to 524 only have to be set to become high in the step-by-step manner toward the upper side of the furnace body 52 from the lower side thereof. For example, temperatures of a lower end position (first position) of the heat-treating region of the reactor core tube 51, an upper end position (second position) thereof and three positions obtained by substantially trisecting a region positioned between the first and second positions are set to become the following temperature ranges.

Namely, the temperature (STEP 1) of the reactor core tube 51 at the lower end position (first position) of the heat-treating region is preferably in the range of 50 to 400°C, and more preferably in the range of 100 to 200°C.

Further, the temperature (STEP 2) of the reactor core tube 51 at the position just above the first position is preferably in the range of 450 to 650°C, and more preferably in the range of 500 to 600°C.

Further, the temperature (STEP 3) of the reactor core tube 51 at the position above the first position through the one position is preferably in the range of 600 to 800°C, and more preferably in the range of 650 to 750°C.

Further, the temperature (STEP 4) of the reactor core tube 51 at the position above the first position through the two positions is preferably in the range of 700 to 900°C, and more preferably in the range of 750 to 850°C.

Furthermore, the temperature (STEP 5) of the reactor core tube 51 at the position above the first position through the three positions, that is, the upper end position (second position) of the heat-treating region, is preferably in the range of 800 to 1,000°C, and more preferably in the range of 850 to 950°C.

By setting the temperature of each position of the reactor core tube 51 within the above range, the above-mentioned effects can be remarkably exhibited. Further, by setting the temperature (STEP 1) of the reactor core tube 51 at the first position to the above upper limit value or less, it is possible to suppress the spraying nozzle 42 from being heated by the heat of the reactor core tube 51. This makes it possible to reliably prevent the liquid droplets from being unstably ejected from the spraying nozzle 42. Further, by setting the temperature to the lower limit value or more, since a temperature difference from the STEP 2 is not so large, the liquid droplets 10 are not rapidly heated, which makes it possible to more reliably prevent the liquid droplets 10 from being burst.

The heat insulator 53 has a function of prevent the heat generated from each of the coils 521 to 524 of the furnace body 52 from running away outside by covering the periphery of the furnace body 52. A material constituting the heat insulator 53 is not limited to a specific kind. As the material constituting the heat insulator 53, well-known heat insulating materials can be used.

The carbon particles 30 carried to the upper end portion of the reactor core tube 51 by the carrier gas are collected into the collecting unit 60 based on static adsorption. Further, the by-products (e.g., tar and the like) generated inside the reactor core tube 51 are recovered into the recovering unit 70.

In this regard, the above-mentioned explanation will made on the method of heat-treating the liquid droplets 10 while being carried vertically upward from below by the stream of a carrier gas, but the liquid droplets 10 may be heat-treated while being carried vertically downward from above or while being carried along a crosswise direction.

Such a heat-treating step can be repeatedly carried out several times. Namely, the heat-treating step may comprise a plurality of heat-treating steps including a first heat-treating step and a second heat-treating step. In the case where the heat-treating step is repeatedly carried out several times, it is preferred that the carbon particles 30 are obtained in the above-mentioned heat-treating step, and then further heat-treated at a temperature higher than the temperature of the heat-treating step (in the case of raising the temperature in the step-by-step manner in order to apply the thermal history to the liquid droplets 10 of the resin dispersion material, the maximum temperature). This makes it possible to completely remove un-carbonized parts (parts in which functional groups of resin particles 1 remain) or impurities in the carbon particles 30, and to stabilize the crystal structure of the carbon particles 30. As a result, the properties of the carbon particles 30 can be further stabilized. Further, it is possible to use a combination of various kinds of the heat-treating methods such as a combination of the first heat-treating step carried out using the ceramic tube or the like and the second heat-treating step carried out using the batch-type heating oven.

Next, description will be concretely made on each component contained in the resin dispersion material.

(Resin particles)

The resin particles 1 are not limited to a specific kind, as long as they are carbonized to be brought into the carbon particles 30 in the above-mentioned heat-treating step.

As a constituent material of such resin particles 1, for example, a thermosetting resin, a thermoplastic resin or the like can be used. Among them, as the constituent material, a polycondensed product of a resin having a benzene skeleton is preferable. Examples of the polycondensed product of a resin having a benzene skeleton include a polycondensed product of a phenol resin such as a novolac-type phenol resin or a resol-type phenol resin; an epoxy resin such as a bisphenol-type epoxy resin; a novolac-type epoxy resin; a melamine resin; an urea resin; an aniline resin; a cyanate resin; a flan resin; a ketone resin; an unsaturated polyester resin or an urethane resin; and a mixture of various kinds of the above resins.

Further, examples of phenols to be used for preparing the phenol resin include, but are not limited to, phenol; cresols such as o-cresol, m-cresol and p-cresol; xylenols such as 2,3-xylenol, 2,4-xylenol, 2,5-xylenol, 2,6-xylenol, 3,4-xylenol and 3,5-xylenol; ethyl phenols such as o-ethyl phenol, m-ethyl phenol and p-ethyl phenol; butyl phenols such as isopropyl phenol, butyl phenol and p-tert-butyl phenol; alkyl phenols such as p-tert-amyl phenol, p-octyl phenol, p-nonyl phenol and p-cumyl phenol; halogenated phenols such as fluorophenol, chlorophenol, bromophenol and iodophenol; monovalent phenol substitution products such as p-phenyl phenol, aminophenol, nitrophenol, dinitrophenol and trinitrophenol; monovalent phenols such as 1-naphthol and 2-naphthol; and polyvalent phenols such as bisphenol A, bisphenol F, bisphenol S and dihydroxynaphthalene. One of them can be used alone or two or more kinds of them can be used by being mixed with each other.

The resin particles 1 may contain nitrogen-containing resins as a main component thereof. Further, in the case where the main component of the resin particles 1 is resins other than the nitrogen-containing resins, at least one kind of nitrogen-containing compounds is contained in the resin particles 1 as a component other than the resins of the main component or in the resin dispersion material as a below-described additive component thereof. Further, the resin particles 1 may contain the nitrogen-containing resins as the main component thereof and the resin dispersion material may contain the nitrogen-containing compound as the additive component thereof. By using such a resin dispersion material, it is possible to obtain a nitrogen-containing carbonized product. In the case where the nitrogen is contained in the carbonized product, a preferable electrical property can be imparted to the carbonized product based on electronegativity of the nitrogen. This makes it possible to promote storage and release of lithium ions, and thus a high charge-discharge property can be imparted thereto.

Here, as the nitrogen-containing resins, preferable are the following reins.

Specifically, examples of the nitrogen-containing resins include a melamine resin, an urea resin, an aniline resin, a cyanate resin, an urethane resin, polyacrylonitrile, an acrylonitrile-styrene (AS) resin, an acrylonitrile-butadiene-styrene (ABS) resin, polyamide, polyetherimide, polyamideimide, polyimide, polyphthalamide, a phenol resin or epoxy resin modified with a nitrogen-containing component such as an amine, and the like.

An average particle size of the resin particles 1 is not limited to a specific value, but is preferably in the range of 0.01 to 10 $\mu$m, and more preferably in the range of 0.1 to 5 $\mu$m. If the average particle size is the above lower limit value or more, each resin particle 1 becomes a particle constituted from a highly-polymerized resin having a sufficient molecular weight. Therefore, it is possible to obtain an effect of further promoting the carbonization of the resin particles 1 in the heat-treating step. Further, if the average particle size is the above upper limit value or less, since clogging of the nozzle is suppressed in the liquid droplet ejecting step, it becomes possible to obtain an effect of more stably ejecting the liquid droplets.

Here, in the case where the average particle size of the resin particles 1 is less than 100 nm, it can be measured using a dynamic light scattering apparatus (e.g., "Zetasizer Nano ZSP" produced by Malvern Instruments). Further, in the case where the average particle size is 100 nm or more, it can be measured using a laser diffraction-type particle size distribution measuring apparatus (e.g., "LA-920" produced by HORIBA Ltd.). In each case, the average particle size of the resin particles 1 can be defined as a particle size D50% which is a particle size whose frequency becomes 50% based on volume.

A shape of the above-mentioned resin particle 1 is not limited to a specific type, but may be any shapes such as a massive shape, a scale shape, a spherical shape and a fabric shape. Among them, the shape of the resin particle 1 is preferably the spherical shape. The resin particles 1 each having the spherical shape can be easily dispersed in the resin dispersion material. This makes it possible to more stably eject the liquid droplets in the liquid droplet ejecting step.

(Dispersion medium)

The dispersion medium is not limited to a specific kind, as long as the above-mentiond resin particles 1 are substantially insoluble therein. Examples of the dispersion medium include organic solvents such as ethanol, isopropyl alcohol, cyclohexane and cyclohexanone, or water. Among them, the water is preferable. The use of the water makes it possible to cool the nozzle, and thus the liquid droplets are stably ejected in the liquid droplet ejecting step. Further, the use of the water also makes it possible to improve safety by decreasing risk of burning of the organic solvent. Further, heat capacity loss based on the burning of the organic solvent is omitted in the heat-treating step, and the water can also become reused. These contribute to cost reduction. Here, "substantially insoluble" means that the resin particles 1 have poor solubility with respect to the dispersion medium 2. This property makes it possible to stably disperse the resin particles 1 into the dispersion medium 2. Therefore, it is possible to stably supply and eject the resin dispersion material. In other words, the resin particles 1 only have to be stably dispersed into the dispersion medium 2 without being dissolved in such a degree that the resin dispersion material can be unchangeably stored and ejected. Such a combination of the resin particles 1 and the dispersion medium 2 is not limited to a specific combination. For example, a combination of resin particles 1, whose amounts capable of being dissolved into 100 g of a dispersion medium at normal temperature is 1 g or less, and such a dispersion medium is preferably used.

(Other components)

The resin dispersion material may contain other components in addition to the resin particles 1 and the dispersion medium 2, as long as the properties thereof are not deteriorated. Examples of the other components include a dispersing agent, a coupling agent, an additive agent, a surfactant and the like.

(Resin dispersion material)

A ratio of components contained in the resin dispersion material is not limited to a specific value. The resin dispersion material contains the resin particles 1 preferably in an amount of 10 to 90 wt%, and more preferably in an amount of 30 to 60 wt%. By setting the amount to the above lower limit value or more, it is possible to reduce the heat quantity required to vaporize the dispersion medium 2 from the liquid droplets 10 to thereby produce the carbon particles 30 at low cost. By setting the amount to the above upper limit value or less, it is possible to stably eject the liquid droplets due to an effect of cooling the nozzle.

A viscosity of the resin dispersion material depends on a temperature of the liquid droplet ejecting step, but a dynamic viscosity of the resin dispersion material in the liquid droplet ejecting step is preferably 50 cSt or less, and more preferably in the range of 1 to 20 cSt. By setting the dynamic viscosity within the above preferable range, the ejection of the liquid droplets is further stabilized.

(Carbon particles)

An average particle size of the carbon particles 30 obtained in the present invention is not limited to a specific value, but preferably in the range of 1 to 50 μm, and more preferably in the range of 1.2 to 30 μm. By setting the average particle size of the carbon particles 30 within the above range, if a mixture for negative electrode is prepared, it is possible to improve an effect of suppressing the carbon particles 30 from being separated or segregated from other components described below such as a binder resin and a dispersion medium therein. Further, if a lithium ion secondary battery is manufactured, it can have stable properties such as output and capacity. Here, the average particle size of the carbon particles 30 means a value obtained from particle sizes thereof to which a measured value thereof is converted based on particle shapes and a Mie theory, and is referred to as an effective particle size. The particle sizes of the carbon particles 30 can be measured by, for example, preparing water as a dispersion medium and a commercial surfactant as a dispersing agent, and then measuring the water, into which the carbon particles 30 are dispersed by an ultrasonic treatment, with a laser diffraction-type particle size distribution method. The average particle size of the carbon particles 30 can be defined as a particle size D50% which is a particle size whose frequency becomes 50% based on volume.

In the case where the particle size whose frequency becomes 50% based on volume is defined as the particle size D50% (D(50)), a particle size whose frequency becomes 10% based on volume is defined as a particle size D10% (D(10)) and a particle size whose frequency becomes 90% based on volume is defined as a particle size D90% (D(90)), a width S of a particle size distribution shown by the following formula (I) of the carbon particles 30 is preferably 2.0 or less, more preferably 1.5 or less, and even more preferably 1.2 or less.

$$S = [D(90) - D(10)] / D(50) \cdots (I)$$

The carbon particles 30 satisfying the above condition have a narrow width in particle size distribution, that is, a very small variation in particle size. In a lithium ion secondary battery in which such carbon particles 30 are used as a material for negative electrode thereof, it is possible to further stabilize the properties such as the output and the capacity thereof.

(Mixture for negative electrode)

The mixture for lithium ion secondary battery negative electrode according to the present invention is a mixture for lithium ion secondary battery negative electrode containing the above carbon particles 30 and a binder.

The mixture for lithium ion secondary battery negative electrode according to the present invention can be prepared by using the carbon material for lithium ion secondary battery (carbon particles 30) obtained in the above way as a negative electrode active material. Such a mixture for lithium ion secondary battery negative electrode can be prepared using well-known methods as a slurry in which the binder is added to the carbon particles 30 as the negative electrode active material and a viscosity thereof is adjusted to a predetermined value by a suitable solvent or dispersion medium. At this time, a conductive agent and the like may be added to the slurry as needed.

As the binder used for preparing the mixture for lithium ion secondary battery negative electrode, well-known materials such as a polyvinylidenefluoride resin, polytetrafluorethylene, a styrene-butadiene copolymer, a polyimid resin, a polyamide resin, polyvinyl alcohol, polyvinyl butyral can be used. Further, examples of the conductive agent include materials generally used as a conductive aid such as graphite, acetylene black and ketjen black. Furthermore, examples of the solvent or dispersion medium used for producing the negative electrode of the present invention include materials, in which the negative electrode active material, the binder, the conductive agent and the like can be uniformly mixed with each other, such as water, N-methyl-2-pyrolidone, methanol and acetonitrile.

(Lithium ion secondary battery negative electrode)

Next, the lithium ion secondary battery negative electrode of the present invention will be described.

The lithium ion secondary battery negative electrode of the present invention is a lithium ion secondary battery negative electrode containing the above-mentioned mixture for lithium ion secondary battery negative electrode.

The lithium ion secondary battery negative electrode is not limited to have a specific structure, but preferably has a structure in which the negative electrode active material is laminated on a current collector formed from a metal foil made of aluminum, copper or the like. The lithium ion secondary battery negative electrode of the present invention can be produced using the mixture for lithium ion secondary battery negative electrode according to the present invention prepared as described above. Specifically, such a lithium ion secondary battery negative electrode can be produced by applying the mixture for lithium ion secondary battery negative electrode onto the current collector formed from the metal foil or the like to form a coating layer having a thickness of several micro-meters to several hundred micro-meters, and then heat-treating the coating layer at about 50 to 200°C to remove the solvent or dispersion medium therefrom.

(Lithium ion secondary battery)

Next, the lithium ion secondary battery of the present invention will be described

The lithium ion secondary battery of the present invention is a lithium ion secondary battery including the lithium ion secondary battery negative electrode of the present invention.

The lithium ion secondary battery of the present invention can be manufactured using the above-mentioned lithium ion secondary battery negative electrode. Such a lithium ion secondary battery can be manufactured using well-known methods, and generally includes the lithium ion secondary battery negative electrode, a positive electrode, an electrolyte and a separator for preventing short circuit between the negative electrode and the positive electrode from being caused. In this regard, in the case where the electrolyte is a solid electrolyte obtained by being mixed with a polymer to exhibit the feature of the separator, the independent separator is unnecessary.

The positive electrode used for manufacturing the lithium ion secondary battery can be produced using well-known methods. For example, the positive electrode can be produced by preparing a slurry in which a binder, a conductive agent and the like are added to a positive electrode active material and a viscosity thereof is adjusted to a predetermined value with a solvent or dispersion medium, applying the slurry onto a current collector formed from a metal foil or the like to form a coating layer having a thickness of several micro-meters to several hundred micro-meters, and then heat-treating the coating layer at about 50 to 200°C to remove the solvent or dispersion medium therefrom.

As the positive electrode active material, well-known materials such as a cobalt composite oxide (e.g., $LiCoO_2$ or the like), a manganese composite material (e.g., $LiMn_2O_4$ or the like), a nickel composite oxide (e.g., $LiNiO_2$ or the like), a mixture of these oxides, $LiNiO_2$ whose at least a part of nickels is substituted for cobalt or manganese, and an iron composite oxide (e.g., $LiFeVO_4$ or $LiFePO_4$ or the like) can be used.

As the electrolyte, well-known electrolyte liquids, normal temperature fused-salts (ionic liquids), organic-type solid electrolytes, inorganic-type solid electrolytes or the like can be used.

Examples of the well-known electrolyte liquids include cyclic carbonates such as ethylene carbonate and propylene carbonate, linear carbonates such as ethyl methyl carbonate and diethyl carbonate and the like. Further, examples of the normal temperature fused-salts (ionic liquids) include an imidazolium-type salt, a pyrrolidinium-type salt, a pyridinium-type salt, an ammonium-type salt, a phosphonium-type salt, a sulfonium-type salt and the like. Examples of the solid electrolytes include: an organic-type polymer gel represented by a linear polymer such as a polyether-based polymer, a polyester-based polymer, a polyimine-based polymer, a polyvinyl acetal-based polymer, a polyacrylonitrile-based polymer, a polyfluoroalkene-based polymer, a polyvinyl chloride-based polymer, a poly(vinyl chloride-vinylidenefluoride)-based polymer, a poly(styreneacrylonitrile)-based polymer or a nitrile rubber; an inorganic-type electrolyte such as an inorganic ceramic (e.g., zirconia or the like), silver iodide, a silver iodide sulfur compound or a silver iodide rubidium compound; and the like. Further, the electrolyte in which a lithium salt is dissolved can be used as the electrolyte for secondary battery. Furthermore, the electrolyte may contain a fire-resistant electrolyte resolvent in order to impart fire-resistant thereto. In addition, the electrolyte may contain a plasticizer in order to reduce a viscosity of the electrolyte.

Examples of the lithium salt to be dissolved into the electrolyte include $LiPF_6$, $LiClO_4$, $LiCF_3SO_3$, $LiBF_4$ , $LiAsF_6$ , $LiN(CF_3SO_2)_2$, $LiN(C_2F_5SO_2)_2$, $LiC(CF_3SO_2)_3$ and the like. One of such lithium salts may be used alone, or two or more of such lithium salts may be used in combination.

An amount of the lithium salt contained in the whole electrolyte is generally in the range of 0.1 to 89.9 wt%, and preferably in the range of 1.0 to 79.0 wt%. The electrolyte may contain a component other than the lithium salt as a condition that the amount of the lithium salt falls within the above range.

The polymer to be used for the electrolyte is not limited to a specific kind, as long as it is electrochemically stable and has high ion conductivity. As the polymer, for example, the acrylate-based polymer, the polyvinylidenefluoride and the like can be used. Further, a polymer synthesized from components containing a salt monomer constituted from an onium cation with a polymerizable functional group and an organic anion with a polymerizable functional group has especially high ion conductivity. Therefore, this polymer is preferable from the viewpoint that the charge-discharge property of the lithium ion secondary battery can be further improved. An amount of the polymer contained in the electrolyte is preferably in the range of 0.1 to 50 wt%, and more preferably in the range of 1 to 40 wt%.

The fire-resistant electrolyte resolvent is not limited to a specific kind, as long as it is a compound having a self-extinguishing property and capable of dissolving the electrolyte salt coexisting therewith. As the fire-resistant electrolyte resolvent, a phosphate ester, a halogen compound, phosphazene or the like can be used.

Examples of the plasticizer include cyiclic carbonates such as ethylene carbonate and propylene carbonate, linear carbonates such as ethyl methyl carbonate and diethyl carbonate and the like. One of the plasticizers may be used alone or two or more of the plasticizers may be used in combination.

In the case where the separator is used in the lithium ion secondary battery of the present invention, as a constituent material of the separator, it is possible to use well-known materials which can prevent the short circuit between the positive electrode and the negative electrode from being caused and are electrochemically stable. Examples of the separator include a separator made of polyethylene, a separator made of polypropylene, a separator made of cellulose, an unwoven cloth, an inorganic-type separator, a glass filter and the like. In the case where the electrolyte contains the polymer, such an electrolyte has often the feature of the separator. In this case, the independent separator is unnecessary.

As a method of manufacturing the lithium ion secondary battery of the present invention, well-known methods can be used. For example, the positive electrode and the negative electrode obtained in the above way are cut so as to have predetermined shapes and sizes, and then the positive electrode and the negative electrode are bonded together through the separator so as not to directly contact with each other to form a single layer cell. Next, the electrolyte is injected between the electrodes of this single layer cell using an immersing method or the like. The cell obtained in this way is, for example, inserted into an exterior body constituted from a film laminate having a three layer structure of polyester film/aluminum film/modified polyolefin film, and then sealed to thereby obtain the secondary battery. The obtained secondary battery may be used alone as a single cell or may be used as a module in which a plurality of the single cells are joined together depending on an application thereof.

**EXAMPLES**

Hereinafter, provided are examples for specifically describing the present invention. In this regard, the present invention is not limited to the following Examples within the range which does not deviate from the purpose and the sense thereof.

[Example 1]

1) Resin dispersion material preparing step

700 parts of phenol, 1,000 parts of a 35% aqueous formaldehyde solution, 350 parts of water, 20 parts of triethyl amine and 0.7 parts of polyvinyl alcohol ("curare poval PVA117", saponification degree of 98%, polymerization degree of 1, 700) were put into a 3L three-necked flask, heated to 100°C, and then cooled to obtain a dispersion liquid in which resin particles were dispersed into the water. By stirring this dispersion liquid, the resin particles were sufficiently dispersed therein to thereby obtain 2,070.7 parts of a resin dispersion material.

An average particle size (particle size D50%) of the resin particles measured using a laser diffraction-type particle size distribution measuring apparatus ("LA-920" produced by HORIBA Ltd.) was 2.8 $\mu$m.

2) Liquid droplet ejecting step

The resin dispersion material was sprayed using a two fluid nozzle (made from "BIM series fine mist forming nozzle" produced by H.IKEUCHI Co., Ltd. by hand) to thereby produce liquid droplets. As a result of measuring sizes of the liquid droplets using a spraying particle size distribution measuring apparatus ("Spraytec" produced by Malvern Instruments Ltd.), an average particle size thereof was 19 $\mu$m.

3) First heat-treating step

The liquid droplets were carried into a furnace in which a maximum temperature thereof was capable of being set to 900°C under a stream of nitrogen of 1.2 L/min to carry out a first heat-treating step for about 10 seconds. As a furnace, used was a ceramic tubular furnace having an inner diameter of 12 mm and a length of 1.2 m. Temperatures of five regions defined by dividing the furnace along a longitudinal direction thereof were set to 150°C, 550°C, 700°C, 800°C and 900°C from a nitrogen introduction port, respectively. In this way, the resin particles were melted and thermally decomposed while removing a dispersion medium containing the water as a main component thereof from the liquid droplets to thereby obtain carbon particles. Thereafter, the carbon particles were collected using an electrostatic collector (made from a high voltage power supply ("HARb-15N2" produced by Matsusada Precision Inc.)) adjusted to 150°C and -10 kV. The liquid droplet ejecting step and the first heat-treating step were continuously carried out for about 3 hours. During this time, it was confirmed that spraying reliability was good and the carbon particles could be stably collected.

4) Second heat-treating step

The collected carbon particles were put into a ceramic tube, and then heat-treated within a furnace whose temperature was 100°C for one hour under a stream of nitrogen to thereby obtain carbon particles for lithium ion secondary battery negative electrode.

5) Evaluation of carbon particles for lithium ion secondary battery negative electrode

An average particle size of the obtained carbon particles was measured by checking them using a laser diffraction-type particle size distribution measuring apparatus ("LA-920" produced by HORIBA Ltd.). As a result, the average particle size (particle size D50%) was 11 μm and a S value represented by the following formula (I) was 1.07.

$$S = [D(90) - D(10)] / D(50) \cdots (I)$$

where D(10) was a particle size whose frequency became 10% based on volume, D(50) was a particle size whose frequency became 50% based on volume, and D(90) was a particle size whose frequency became 90% based on volume.

6) Preparation of mixture for lithium ion secondary battery negative electrode

The above-mentioned carbon particles, carboxymethyl cellulose (CMC) ("CMC DAICEL 2200" produced by DAICEL FINECHEM LTD.) which was a commercial binder, and acetylene black ("DENKA BLACK" produced by DENKI KAGAKU KOGYO KABUSHIKI KAISHA) which was the conductive aid were mixed with each other in a mass ratio of 100:7:4, and additionally condensed to adjust a viscosity thereof to thereby obtain a mixture for lithium ion secondary battery negative electrode. Specifically, first, the CMC was dissolved into a predetermined amount of water to prepare a 2 mass% aqueous solution. Next, the carbon particles and the conductive aid were added to the aqueous CMC solution at predetermined amounts so as to become the above mass ratio, and then stirred and mixed using a rotational and orbital mixer. During the stirring and mixing, water was optionally added into the rotational and orbital mixer little by little so as to adjust a final viscosity thereof to 5,000 mPa·sec.

7) Production of electrode (negative electrode) for lithium ion secondary battery

The above-mentioned mixture for lithium ion secondary battery was applied onto a copper foil having a thickness of 20 μm, and then dried in a vacuum at 110°C for 1 hour. After drying in the vacuum, the mixture was pressure-formed by roll press, and then stamped out using a die having an inner diameter of 13 mm to thereby obtain an electrode for lithium ion secondary battery.

8) Manufacture of lithium ion secondary battery

The above produced electrode (negative electrode) for lithium ion secondary battery, a separator (porous film made of polypropylene, having a diameter of 16 mm and a thickness of 25 μm) and lithium metal (having a diameter of 12 mm and a thickness of 1 mm) serving as an operation electrode were arranged in this order at a predetermined position inside a 2032-type coin cell produced by Hosen to form a half cell. Moreover, a liquid mixture of ethylene carbonate and diethylene carbonate (a volume ratio thereof was 1:1), in which perchloric acid lithium was dissolved so as to become a concentration of 1 mol/L, was injected into the half cell as an electrolyte liquid to thereby manufacture a lithium ion secondary battery.

[Example 2]

Carbon particles for negative electrode, a mixture for negative electrode, an electrode (negative electrode) for lithium ion secondary battery and a lithium ion secondary battery were obtained in the same manner as Example 1 expect that the resin dispersion material was obtained as follows.
700 parts of phenol, 1,000 parts of a 35% aqueous formaldehyde solution, 350 parts of water, 20 parts of triethyl amine and 70 parts of polyvinyl alcohol ("curare poval PVA117", saponification degree of 98%, polymerization degree of 1, 700) were put into a 3L three-necked flask, heated to 100°C, and then cooled to obtain a dispersion liquid in which resin particles were dispersed into the water. By stirring this dispersion liquid, the resin particles were sufficiently dispersed therein to thereby obtain 2,140 parts of a resin dispersion material.

[Example 3]

Carbon particles for negative electrode, a mixture for negative electrode, an electrode (negative electrode) for lithium ion secondary battery and a lithium ion secondary battery were obtained in the same manner as Example 1 expect that a phenol resin emulsion in which a phenol resin was emulsified in water ("PR-51464" produced by SUMITOMO BAKELITE Co., Ltd.) was used as the resin dispersion material.

[Example 4 ]

Carbon particles for negative electrode, a mixture for negative electrode, an electrode (negative electrode) for lithium ion secondary battery and a lithium ion secondary battery were obtained in the same manner as Example 1 expect that the two fluid nozzle used in the liquid droplet ejecting step was changed to a syringe-type nozzle ("AM6S+ASV-1-MH" produced by ATOMAX).

[Example 5]

Carbon particles for negative electrode, a mixture for negative electrode, an electrode (negative electrode) for lithium ion secondary battery and a lithium ion secondary battery were obtained in the same manner as Example 1 expect that the resin dispersion material was obtained as follows.

100 parts of aniline, 697 parts of a 35% aqueous formaldehyde solution and 5 parts of oxalic acid were put into a 3L three-necked flask provided with a stirrer and a condenser tube, reacted with each other at 100°C for 3 hours, and then dehydrated to obtain 110 parts of an aniline resin. In this regard, a weight average molecular weight of the obtained aniline resin was about 800.

Next, 110 parts of ethanol was added to 110 parts of the obtained aniline resin within the three-necked flask, sufficiently stirred to thereby obtain 220 parts of a resin dispersion material in which resin particles of the aniline resin were dispersed.

[Example 6]

Carbon particles for negative electrode, a mixture for negative electrode, an electrode (negative electrode) for lithium ion secondary battery and a lithium ion secondary battery were obtained in the same manner as Example 1 expect that the amount of the water added into the three-necked flask was changed to 500 parts.

[Example 7]

Carbon particles for negative electrode, a mixture for negative electrode, an electrode (negative electrode) for lithium ion secondary battery and a lithium ion secondary battery were obtained in the same manner as Example 1 expect that the resin dispersion material was obtained as follows.

700 parts of phenol, 1,000 parts of a 35% aqueous formaldehyde solution, 500 parts of water and 20 parts of triethyl amine were put into a 3L three-necked flask, and then reacted with each other at normal temperature (25°C) for 3 hours while being sufficiently stirred to thereby obtain 2,220 parts of a resin dispersion material.

[Example 8]

Carbon particles for negative electrode, a mixture for negative electrode, an electrode (negative electrode) for lithium ion secondary battery and a lithium ion secondary battery were obtained in the same manner as Example 1 expect that in the first heat-treating step, the temperatures of the five regions of the furnace were set to 150°C, 500°C, 700°C, 800°C and 800°C from the nitrogen introduction port, respectively.

[Example 9]

Carbon particles for negative electrode, a mixture for negative electrode, an electrode (negative electrode) for lithium ion secondary battery and a lithium ion secondary battery were obtained in the same manner as Example 1 expect that in the first heat-treating step, the temperatures of the five regions of the furnace were set to 150°C, 600°C, 700°C, 900°C and 900°C from the nitrogen introduction port, respectively.

[Example 10]

Carbon particles for negative electrode, a mixture for negative electrode, an electrode (negative electrode) for lithium ion secondary battery and a lithium ion secondary battery were obtained in the same manner as Example 1 expect that in the first heat-treating step, the temperatures of the five regions of the furnace were set to 150°C, 500°C, 900°C, 900°C and 900°C from the nitrogen introduction port, respectively.

[Comparative Example]

Carbon particles for negative electrode, a mixture for negative electrode, an electrode (negative electrode) for lithium ion secondary battery and a lithium ion secondary battery were obtained in the same manner as Example 1 expect that in the first heat-treating step, dried particles obtained by drying the liquid droplets formed in the liquid droplet ejecting step, and then collecting them once were carried into the furnace instead of the liquid droplets.

9) Evaluation of lithium ion secondary battery

(Evaluation of initial charge-discharge property)

A charge capacity and a discharge capacity of the lithium ion secondary battery of each Example were measured according to the following condition, and then a discharge capacity density, which was calculated from the discharge capacity after being charged, was evaluated. In this regard, the measurement of the charge-discharge capacity was carried out using a charge-discharge property evaluating apparatus ("HJR-1010mSM8" produced by HOKUTO DENKO CORP.).

The charge capacity was defined as an electrical quantity charged to the lithium ion secondary battery by performing a constant current charge thereto at a constant current density of 25 mA/g until an electrical potential became 0 V, and then performing a constant voltage charge thereto at 0 V until a current density became 1.25 mA/g. On the other hand, the discharge capacity was defined as an electrical quantity discharged by performing a constant current discharge therefrom at a current density of 25 mA/g until an electrical potential became 2.5 V.

(Evaluation of charge-discharge cycle property)

The charge-discharge capacity of the lithium ion secondary battery of each Example was repeatedly measured 50 times according to the same condition as the condition in the evaluation of the initial charge-discharge property except that a cutoff electrical potential of the discharge condition was changed to 1.5 V. By using a discharge capacity density of the first cycle (initial discharge capacity density) and a discharge capacity density of the fiftieth cycle calculated from this measurement result, a charge-discharge cycle property defined by the following formula (capacity maintenance ratio in fiftieth cycle) was evaluated.

Cycle property (%, capacity maintenance ratio in fiftieth cycle) = discharge capacity density of fiftieth cycle (mAh/g) / initial discharge capacity density (mAh/g) x 100

The evaluation results obtained as described above are shown in Table 1 and Table 2.

[Table 1]

|  | Ex. 1 | Ex. 2 | Ex. 3 | Ex. 4 | Ex. 5 | Ex. 6 |
|---|---|---|---|---|---|---|
| Discharge capacity density [mAh/g] | 382 | 390 | 264 | 368 | 384 | 372 |
| Cycle property | 98 | 98 | 80 | 94 | 92 | 94 |

[Table 2]

|  | Ex. 7 | Ex. 8 | Ex. 9 | Ex. 10 | Com. Ex. |
|---|---|---|---|---|---|
| Discharge capacity density [mAh/g] | 240 | 384 | 352 | 361 | 230 |
| Cycle property | 92 | 95 | 97 | 94 | 70 |

From the results shown in Table 1 and Table 2, the lithium ion secondary battery obtained in each Example had a high charge-discharge capacity (charge-discharge capacity density) and an excellent charge-discharge cycle property. On the other hand, the lithium ion secondary battery obtained in Comparative Example was evaluated in the same manner as each Example. As a result, it had lower charge-discharge capacity and capacity maintenance ratio in fiftieth cycle than that of any Examples. Therefore, it was confirmed that the lithium ion secondary battery of each Example had an excellent charge-discharge capacity density and a charge-discharge cycle property as compared with that of Comparative Example.

As described above, by using the producing method of the present invention, it was confirmed to be able to stably provide a carbon material for lithium ion battery negative electrode having an excellent charge-discharge capacity density and a charge-discharge cycle property, and also to provide a carbon material for lithium ion secondary battery negative electrode, a mixture for lithium ion secondary battery negative electrode, a lithium ion secondary battery negative electrode and a lithium ion secondary battery.

**INDUSTRIAL APPLICABILITY**

According to a method of producing a carbon material for lithium ion secondary battery negative electrode according to the present invention, carbon particles can be obtained by ejecting a plurality of liquid droplets of a resin dispersion material containing a dispersion medium and a plurality of resin particles which are substantially insoluble in the dispersion medium, and then heat-treating these liquid droplets.

This makes it possible to omit the time required for the step of crushing the mass of carbonized products of a resin which was being carried out during the conventional producing steps of the carbon particles. Therefore, it is possible to remarkably reduce the number of the producing steps of the carbon particles and to easily obtain the carbon particles for a short period of time. Further, since a large-sized crushing apparatus for producing the carbon particles is not required, it is possible to produce the carbon particles at low cost. Furthermore, in the case where the carbon particles are conventionally produced through the crushing step, the shapes or sizes of the obtained carbon particles become unstable. However, according to the present invention, by controlling the particle sizes of the resin particles, the amount of the resin particles contained in the resin dispersion material and the particle sizes of the liquid droplets of the resin dispersion material, it is possible to stably obtain carbon particles having designed shapes and sizes. This makes it possible to improve productivity of such carbon particles and provide a lithium ion secondary battery having stable properties such as output and capacity.

Therefore, the present invention has industrial applicability.

**Claims**

1.  A method of producing a carbon material for lithium ion secondary battery negative electrode, the carbon material containing a plurality of carbon particles, the method comprising the steps of:

     preparing a resin dispersion material containing a dispersion medium and a plurality of resin particles which are substantially insoluble in the dispersion medium;
     ejecting a plurality of liquid droplets of the resin dispersion material using a liquid droplet ejecting method, the liquid droplets each containing the dispersion medium and at least one of the resin particles; and
     heat-treating the plurality of liquid droplets so that the resin particle contained in each liquid droplet is carbonized while removing the dispersion medium to thereby obtain at least one of the carbon particles from each liquid droplet.

2.  The method of producing a carbon material for lithium ion secondary battery negative electrode as claimed in claim 1, wherein the liquid droplet ejecting step and the heat-treating step are continuously carried out.

3.  The method of producing a carbon material for lithium ion secondary battery negative electrode as claimed in claim 2, wherein a time interval between the liquid droplet ejecting step and the heat-treating step is 30 seconds or less.

4.  The method of producing a carbon material for lithium ion secondary battery negative electrode as claimed in any one of claims 1 to 3, wherein in the heat-treating step, the plurality of liquid droplets are heat-treated while being carried by a stream of a carrier gas.

5.  The method of producing a carbon material for lithium ion secondary battery negative electrode as claimed in claim 4, wherein in the heat-treating step, the plurality of liquid droplets are carried vertically upward from below by the stream of a carrier gas.

6.  The method of producing a carbon material for lithium ion secondary battery negative electrode as claimed in any one of claims 1 to 5, wherein in the heat-treating step, the plurality of liquid droplets are passed through at least two regions having different temperatures.

7.  The method of producing a carbon material for lithium ion secondary battery negative electrode as claimed in claim 6, wherein a temperature difference between the two regions is in the range of 50 to 500°C.

8. The method of producing a carbon material for lithium ion secondary battery negative electrode as claimed in any one of claims 1 to 7, further comprising, after the heat-treating step, a step of heat-treating the carbon particles at a temperature higher than that in the heat-treating step.

9. The method of producing a carbon material for lithium ion secondary battery negative electrode as claimed in any one of claims 1 to 8, wherein the at least one of the resin particles comprises a plurality of the resin particles, and wherein in the heat-treating step, the resin particles contained in each liquid droplet are melted and integrated with each other to form one molten particle, and then the one molten particle is carbonized to thereby obtain the carbon particle.

10. The method of producing a carbon material for lithium ion secondary battery negative electrode as claimed in any one of claims 1 to 9, wherein in the resin dispersion material preparing step, the resin dispersion material is obtained by dispersing the resin particles into the dispersion medium.

11. The method of producing a carbon material for lithium ion secondary battery negative electrode as claimed in any one of claims 1 to 10, wherein an average particle size of the resin particles is in the range of 0.01 to 10 $\mu$m.

12. The method of producing a carbon material for lithium ion secondary battery negative electrode as claimed in any one of claims 1 to 11, wherein the resin particles contain a polycondensed product of a resin having a benzene skeleton.

13. The method of producing a carbon material for lithium ion secondary battery negative electrode as claimed in any one of claims 1 to 12, wherein the dispersion medium contains water.

14. The method of producing a carbon material for lithium ion secondary battery negative electrode as claimed in any one of claims 1 to 13, wherein an average particle size of the plurality of liquid droplets is in the range of 1 to 100 $\mu$m.

15. A mixture for lithium ion secondary battery negative electrode containing carbon particles obtained by the method of producing a carbon material for lithium ion secondary battery negative electrode defined by any one of claims 1 to 14.

16. A lithium ion secondary battery negative electrode formed using the mixture for lithium ion secondary battery negative electrode defined by claim 15.

17. A lithium ion secondary battery including the lithium ion secondary battery negative electrode defined by claim 16.

FIG.1

**FIG.2**

## INTERNATIONAL SEARCH REPORT

| International application No. |
| --- |
| PCT/JP2013/054960 |

**A. CLASSIFICATION OF SUBJECT MATTER**
*H01M4/587*(2010.01)i

According to International Patent Classification (IPC) or to both national classification and IPC

**B. FIELDS SEARCHED**

Minimum documentation searched (classification system followed by classification symbols)
H01M4/587

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A<br>X | JP 2011-525468 A (National Research Council of Canada),<br>22 September 2011 (22.09.2011),<br>paragraph [0028]; fig. 2<br>& US 2011/0082024 A1 & EP 2297032 A<br>& WO 2009/149540 A1 & CA 2725827 A<br>& CN 102089241 A | 1-14<br>15-17 |
| A<br>X | JP 9-143476 A (Maruzen Petrochemical Co., Ltd.),<br>03 June 1997 (03.06.1997),<br>paragraphs [0003], [0042] to [0045]<br>& CN 1159421 A & CN 1319642 A | 1-14<br>15-17 |

☒ Further documents are listed in the continuation of Box C.  ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 18 April, 2013 (18.04.13) | 07 May, 2013 (07.05.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2013/054960

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-222215 A  (Kuraray Co., Ltd.),<br>07 October 2010 (07.10.2010),<br>entire text; all drawings<br>(Family: none) | 1-17 |
| A | JP 2004-182509 A  (Asahi Kasei Corp.),<br>02 July 2004 (02.07.2004),<br>entire text; all drawings<br>(Family: none) | 1-17 |
| A | JP 2006-310628 A  (Nippon Zeon Co., Ltd.),<br>09 November 2006 (09.11.2006),<br>entire text; all drawings<br>(Family: none) | 1-17 |
| A | JP 2011-60467 A  (The Kansai Coke and Chemicals Co., Ltd.),<br>24 March 2011 (24.03.2011),<br>entire text; all drawings<br>(Family: none) | 1-17 |
| P,A | JP 2012-124121 A  (Hitachi Chemical Co., Ltd.),<br>28 June 2012 (28.06.2012),<br>entire text; all drawings<br>& WO 2012/077785 A      & WO 2012/077785 A1<br>& TW 201230475 A | 1-17 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H769611 A